# EUROPÄISCHE PATENTSCHRIFT

(11) **EP 2 014 813 B1**
(45) Veröffentlichungstag und Bekanntmachung des Hinweises auf die Patenterteilung: **22.12.2010**
(21) Anmeldenummer: 07013400.2
(22) Anmeldetag: 09.07.2007
(51) Int. Cl.: D04H 1/74, D01G 25/00, G01B 21/08

(54) **Verfahren zum Herstellen einer verfestigten Vliesstoffbahn**
Method of manufacturing a consolidated nonwoven fabric
Procédé de fabrication d'un non tissée consolidé

(43) Veröffentlichungstag der Anmeldung: 14.01.2009
(73) Patentinhaber: Oskar Dilo Maschinenfabrik KG, 69412 Eberbach (DE)
(72) Erfinder: Dilo, Johann P., Dipl.-Ing., 69412 Eberbach (DE)
(74) Vertreter: Wächter, Jochen

(56) Entgegenhaltungen:
- EP-A- 1 319 492
- EP-A- 1 715 093
- DE-A1- 19 743 279
- GB-A- 2 080 716
- JP-A- 58 187 210

## Beschreibung

Die Erfindung bezieht sich auf ein Verfahren zum Herstellen einer verfestigten Vliesstoffbahn, beispielsweise eines Nadelfilzes, durch Kreuzlegen einer von einem Florerzeuger mit gleichmäßigem Querprofil erzeugten Faserflorbahn und anschließendes Verfestigen der kreuzgelegten Vliesbahn, wobei die Dicke des verfestigten Produkts oder der kreuzgelegten Vliesbahn fortlaufend gemessen und die Messwerte zur Beeinflussung der Florablage verwendet werden. Ein Verfahren dieser Art ist aus EP 1 057 906 B1 bekannt.

Es ist bekannt, dass beim Vernadeln einer Vliesbahn die verarbeitete Bahn aufgrund von Verzügen nicht nur verkürzt wird und in der Breite einspringt, sondern auch einen unterschiedlichen Dickenaufbau erhält dergestalt, dass die Dicke der vernadelten Materialbahn im Randbereich gegenüber dem Mittenbereich zunimmt. Den gleichen Effekt kann man auch beobachten, wenn man eine Vliesbahn mit Hilfe anderer Verfahren, beispielsweise durch Heißluftverfestigung, Thermofixierung oder Verwirbelungsverfahren, wie Wasser-, Dampf- und Luftstrahltechnik, verfestigt. Da die Strahldüsen analog den Nadeln einer Nadelmaschine angeordnet sind, haben die Verwirbelungsverfahren ähnliche Einflüsse auf die verfestigte Materialbahn bei ihrer Herstellung. Thermofixierung führt zu einer quer zur Bahnrichtung gesehen ungleichen Schrumpfung der Bahn, die sich in einer Profilveränderung äußert.

Ein ungleichmäßiges Dickenprofil ist in aller Regel unerwünscht, weil die dickeren Randbereiche ggf. abgeschnitten werden müssen, was Materialverlust zur Folge hat. Zur Abhilfe ist beispielsweise aus EP 0 315 930 B2 ein mit einem Kreuzleger arbeitendes Verfahren bekannt geworden, bei dem in einer zu nadelnden Vliesbahn eine Vorkompensation ausgeführt wird, indem die Vliesbahn mit einem Querprofil erzeugt wird, das in den Randbereichen dünner als in der Mitte ist. Dieses kann gemäß dem genannten Verfahren in der Weise erreicht werden, dass man jene Abschnitte der abzulegenden Florbahn, die im Randbereich der Vliesbahn zu liegen kommen, durch Verstreckung innerhalb des Kreuzlegers, die durch voneinander unabhängige Steuerung der Bewegung von Oberwagen und Legewagen erreicht wird, dünner macht, als die übrigen Abschnitte. Da dieser Streckvorgang durch entsprechenden steuernden Eingriff in die an der Florverarbeitung beteiligten Aggregate beeinflusst werden kann, bietet es sich an, das Arbeitsergebnis durch Messungen zu kontrollieren und davon gesteuert auf den Streckvorgang einzuwirken.

Die eingangs genannte EP 1 057 906 B1 beschreibt hierzu eine Vlieserzeugungsanlage, bei der an einer geeigneten Stelle hinter dem Auslass des Kreuzlegers eine Messeinrichtung zur Bestimmung der Dichte der Vliesbahn angeordnet ist. Die ermittelten Dichtewerte werden zur Einstellung einer Profilbildungseinrichtung herangezogen, so dass die gewünschte Profilbildung gezielt eingestellt und überwacht oder geregelt werden kann. Zur Automatisierung der Überwachung und Regelung ist die Messeinrichtung mit der Profilbildungseinrichtung in einem Regelkreis verbunden. Die Messeinrichtung kann auch hinter einer Nadelmaschine angeordnet sein, wodurch sie eventuelle Dichtefehler im Endprodukt ermitteln kann. Die Messeinrichtung erstreckt sich quer über die gesamt Lege- oder Vliesbreite bzw. Nadelfilzbreite und misst die Vlies- bzw. Nadelfilzdichte an mehreren Stellen der Bahnbreite. Um die Messergebnisse zu optimieren, sind eine Vielzahl von Messpunkten vorgesehen, die in einer Reihe oder versetzt zueinander angeordnet und mit einer möglichst hohen Dichte positioniert sind.

Eine ähnliche Einrichtung ist aus US 6 434 795 B1 bekannt. Sie beschreibt ein Verfahren zum Steuern des Querprofils einer Vliesbahn in einer Vlieserzeugungsanlage, bei der an einer Messstation eine physikalische Größe der Vliesbahn an mehren, über die Breite der Bahn verteilten Stellen gemessen wird, um das Querprofil der Vliesbahn aufzuzeichnen. Im Falle einer Diskrepanz zwischen dem aufgezeichneten Profil und einem Bezugsprofil wird ein Betriebsparameter korrigiert, der an einer Stelle des zu legenden Flors wirksam ist, die an einem zu korrigierenden Punkt in der Quererstreckung der gelegten Vliesbahn abgelegt wird. Es findet also ein Soll/Ist-Vergleich an diskret ausgemessenen Punkten statt, die quer zur Laufrichtung der Vliesbahn verteilt sind.

Aus EP 1 715 093 A ist ebenfalls eine ähnliche Einrichtung zum Steuern des Querprofils einer Vliesbahn bekannt. Dabei werden Florbahnen in einem Vliesleger kreuzgelegt, die Dicke der dadurch entstehenden Vliesbahn wird unmittelbar anschließend an den Legevorgang über die gesamte Breite der Vliesbahn gemessen und die Ablage der nächsten Florbahn entsprechend dem Ergebnis der Messung gesteuert. Damit wird ein besonders kurze Regelstrecke erreicht.

Aus anderen Bereichen der Technik ist es bekannt, Regelkreise auf Basis von Zwei- oder Dreipunktmessungen des Endprodukts zu steuern. Ein Beispiel eines solchen Regelkreises ist aus EP 1 319 492 A bekannt, bei dem die Dicke einer extrudierten Kunststofffolie in der Mitte und an den Seiten der Folie gemessen wird und eine entsprechende Dickenbeeinflussung im Bereich des Extrusions-Formwerkzeugs als Reaktion hierauf stattfindet.

Die erläuterten bekannten Verfahren erfordern eine Vielzahl von Messungen und Datenverarbeitungsschritte durch Vergleiche mit vorgegebenen Sollgrößen. Das macht nicht nur den apparativen Einsatz hoch, sondern erfordert auch einen entsprechend hohen Aufwand an Datenverarbeitung. Eine solche Messanlage für eine Arbeitsbreite von beispielsweise 3,5 m kostet derzeit etwa 80.000 Euro.

Der Erfindung liegt die Aufgabe zugrund, ein Verfahren, der Eingangs genannten Art anzugeben, das mit einem geringen apparativen Aufwand auskommt.

Diese Aufgabe wird durch die im Anspruch 1 angegebene Erfindung gelöst. Vorteilhafte

Ausgestaltungen der Erfindung sind Gegenstand der Unteransprüche.

Die Erfindung geht von der Überlegung aus, dass der Einsprung, der durch den Verfestigungsvorgang, beispielsweise durch einen Nadelungsvorgang, an einer Vliesbahn erzeugt wird, und die damit verbundene Randaufdickung des verfestigten Produkts, beispielsweise eines Nadelfilzes oder eines Vliesstoffs, einer gegebenen Gesetzmäßigkeit gehorcht, die zur Folge hat, dass die Verfestigung einer Vliesbahn, die einen Querschnitt gleichmäßiger Dicke hat, zu einem Querprofil des verfestigten Produkts führt, das einen ganz bestimmten, d.h. reproduzierbaren Verlauf hat, der von den Herstellungsparametern des verfestigten Produkts bestimmt ist.

Diese Parameter lassen sich in die zu verfestigende Vliesbahn bestimmende erste Parameter und den Verfestigungsvorgang bestimmende zweite Parameter unterteilen. Zu den ersten Parametern gehören z.B. die Faserart im weitesten Sinne, die durch die Art, des Krempelns hervorgerufene Faserorientierung, die Florbahndicke, die Anzahl der übereinander getäfelten Florlagen und deren Legewinkel in der zu nadelnden Vliesbahn, durch den die Faserorientierung in der Vliesbahn ebenfalls beeinflusst wird. Die Faserart ist u.a. durch Fasermaterial, Faserdicke, Faserlänge und Fasertextur bestimmt. Die den Verfestigungsvorgang bestimmenden Parameter sind beim Nadeln u.a. die Nadelbrettbestückung im weitesten Sinne, einschließlich deren Dichte, die Nadelfeinheit, die Eindringtiefe der Nadeln in die Vliesbahn, die Nadelverweildauer in der Vliesbahn und der Vliesbahnvorschub pro Stichzyklus. Vergleichbares gilt für andere Verfestigungstechniken, wie beispielsweise die Strahltechnik, nur dass dort, wo anders, als bei der Nadelungstechnik, nicht getaktet gearbeitet wird und Überlegungen zum Vorschub pro Takt daher obsolet sind. Bei thermischen und chemischen Verfestigungsverfahren sind deren entsprechende Parameter in Betracht zu ziehen. Auch bei einer Malivliesverfestigung kann das erfindungsgemäße Verfahren verwendet werden. Weiterhin kommen Kombinationen der vorgenannten Verfestigungsarten in Betracht. Auch im Zusammenhang mit solchen kann die Erfindung eingesetzt werden.

Die ersten und zweiten Parameter bestimmen somit zusammen eine Gesetzmäßigkeit, aus der sich neben einem ganz bestimmten Einsprung der Vliesbahn beim Verfestigen auch eine ganz bestimmte Randaufdickung im verfestigten Produkt und dementsprechend auch eine ganz bestimmte, individuell notwendige Vorkompensation der Randaufdickung durch Beeinflussung des Querprofils der zu verfestigenden Vliesbahn ergibt.

Für die Qualitätskontrolle des verfestigten Produkts, z.B. einer Nadelfilzbahn, reicht es daher aus, wenn im Extremfall an nur einem Rand der Nadelfilzbahn und in der Mitte derselben gemessen wird. Zum Ausschluss von Fehlern, die sich durch ggf. unsymmetrische Arbeitsweise des Vlieslegers ergeben könnten, wird vorzugsweise im Bereich beider Ränder gemessen. Es ist somit bei Einsatz der Erfindung nicht erforderlich, den gesamten Profilverlauf quer zur verfestigten Materialbahn an einer Vielzahl von Punkten zu messen und mit Sollwerten zu vergleichen. Es ergibt sich eine erhebliche Verringerung an apparativem und laufendem Rechenaufwand.

Das Querprofil, d.h. der Profilverlauf, einer verfestigten Vliesstoffbahn, die aus einer kreuzgelegten Vliesbahn gleichmäßiger Dicke erzeugt worden ist, ist bei Standardanwendungen im Allgemeinen bekannt. Die Messung in der erfindungsgemäßen Weise dient hier maßgeblich der Kontrolle und Qualitätssicherung, ohne dass es notwenig ist, das Querprofil aufzunehmen und davon ausgehend ein kompliziertes Streckprogramm für das Florstreckwerk festzulegen. Der Vergleich der am Rand der verfestigten Vliesstoffbahn gemessenen Dickenwerte mit den in der Mitte der Bahn gemessenen Dickenwerten genügt dann, um eine Kompensation zu erzielen, die für Standardsituationen ausreichend ist.

Bei Sonderanwendungen können die Randaufdickungen je nach den genannten Parametern sehr unterschiedlich sein. Wenn sich die Randaufdickungen nur über eine geringe Breite der genadelten Vliesstoffbahn erstrecken, sind die durch das Florstreckwerk in der Florbahn zu erzeugenden Dünnstellen nur kurz zu machen. Ist die Randaufdickung gering, muss der Flor in den Dünnstellen nur gering verstreckt sein. Entsprechendes gilt umgekehrt, wenn die Randaufdickungen einen breiten Bereich erfassen bzw. wenn die Randaufdickungen stark sind. In diesen Fällen ist es erforderlich, den Zusammenhang, d.h. die Gesetzmäßigkeit, zwischen den Parametern und der Randaufdickung zuvor zu erfassen und beispielsweise in einem Speicher abzulegen. Mit Hilfe der Parameter und der zuvor erfassten Gesetzmäßigkeit lässt sich dann mit Hilfe eines Vergleichs der in der Mitte und am Rand der Vliesstoffbahn erfassten Messwerte das Florstreckwerk so steuern, dass die für die Kompensation notwendigen Längen der Dünnstellen und der erforderliche Streckgrad in der Florbahn erzielt werden, um die sich bei der Verfestigung der Vliesbahn einstellende Profiländerung im Voraus zu kompensieren.

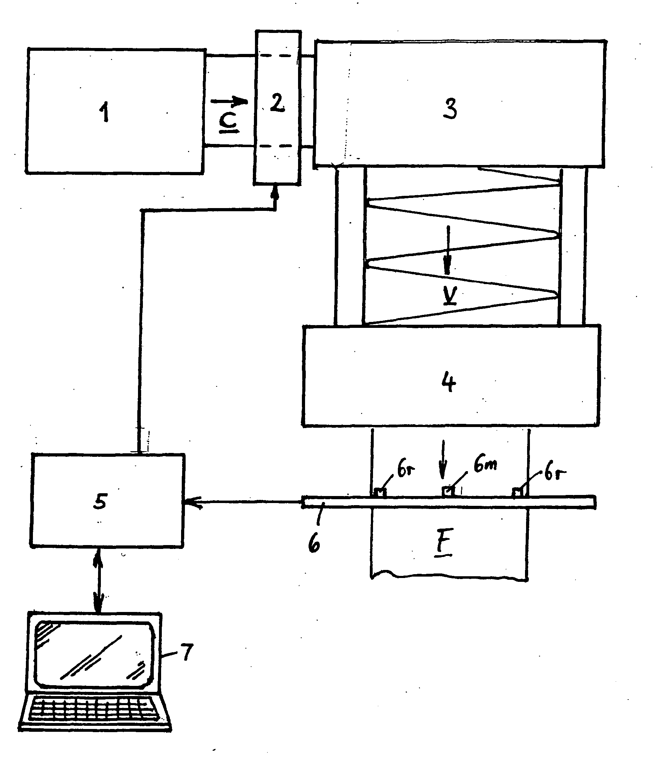

Die Erfindung wird nachfolgend unter Bezugnahme auf ein in der Zeichnung schematisch dargestelltes Ausführungsbeispiel näher beschrieben.

Die Zeichnung zeigt als Beispiel eine Nadelfilzherstellungsanlage, bestehend aus einer Krempel 1, einem Florstreckwerk 2, einem Vliesleger 3, einer Nadelmaschine 4 und einem Steuergerät 5, das mit einer Messstation 6 verbunden ist. Mit dem Steuergerät 5 ist weiterhin ein Endgerät 7 verbunden. Außerdem ist das Florstreckwerk 2 an das Steuergerät 5 angeschlossen.

Die Messstation 6 ist im dargstellten Beispiel stromabwärts von der Nadelmaschine 4 angeordnet und hat drei Sensoren 6m und 6r, von denen der Sensor 6m in der Mitte und die Sensoren 6r im Bereich der beiden Ränder einer die Nadelmaschine 4 verlassenden Nadelfilzbahn F angeordnet sind.

Mit Hilfe einer Tastatur des Endgeräts 7 können in das Steuergerät 5 die Parameter eingegeben werden, die den Herstellungsvorgang der Nadelfilzbahn F bestimmen, nämlich die oben erwähnten ersten Parameter, die sich auf die zu nadelnde Vliesbahn V beziehen, wie sie von Krempel 1 und Vliesleger 3 erzeugt wird, und die zweiten Parameter, die sich auf die Verarbeitungsbedingungen beziehen, denen die vom Kreuzleger 3 abgegebene Vliesbahn V in der Nadelmaschine unterworfen wird. Das Steuergerät 5 sucht dann in einem internen Speicher das dazu passende, zuvor festgelegte Korrekturprogramm für den Betrieb des Florstreckwerks 2 heraus. Dieses Betriebsprogramm beinhaltet Daten über den Umfang und die Steilheit des Streckvorgangs, d.h. die Zunahme und Abnahme der Verstreckung über der Länge des verstreckten Abschnitts, denen die von der Krempel 1 abgegebene Florbahn C im Florstreckwerk 2 unterworfen werden muss, und die Zeitabstimmung der Arbeitsweise des Florstreckwerks 2 in Bezug auf die Arbeitsweise des Kreuzlegers 3, damit die vom Florstreckwerk 2 erzeugten Dünnstellen in der Florbahn C an vorbestimmten Stellen der vom Kreuzleger erzeugten, getäfelten Vliesbahn V, nämlich in deren Randbereichen, zu liegen kommen.

Im Betrieb der Anlage wird bei vorschriftsmäßiger Einstellung des Betriebsprogramms für das Florstreckwerk 2 aus der von der Krempel 1 mit gleichmäßiger Dicke abgenommenen Florbahn C vom Florstreckwerk 2 eine solche Florbahn erzeugt, die in regelmäßigen Abständen Dünnstellen aufweist. Diese Florbahn wird vom Kreuzleger 3 auf ein Abliefertransportband zickzackförmig abgelegt, wobei aufgrund der regelmäßig auftretenden Dünnstellen in der Florbahn in der kreuzgelegten Vliesbahn V eine vorbestimmte Querprofilierung erzeugt wird, die in den Randbereichen der Vliesbahn V eine geringere Dicke aufweist, als in der Mitte. Weiter ergibt sich bei vorschriftsmäßiger Arbeitsweise der Anlage am Ausgang der die kreuzgelegte Vliesbahn V bearbeitenden Nadelmaschine 4 ein genadeltes Erzeugnis, d.h. eine Nadelfilzbahn F mit gleichmäßigem Querdickenprofil. Die Dicke der Nadelfilzbahn F wird von den Sensoren 6m und 6r in der Mitte und in den Randbereichen der Nadelfilzbahn F überwacht und an das Steuergerät 5 übermittelt. Von dort können die Messergebnisse an einem Monitor des Endgerätes 7 zur Anzeige gebracht werden. Weiterhin ist vorgesehen, dass das Steuergerät 5 regelnd am Streckwerk 2 eingreift, wenn die Nadelfilzbahn F in ihren Randbereichen nicht jene Dicke haben sollte, die sie in der Mitte aufweist.

Es versteht sich, dass für eine Kollektion von Erzeugnissen, die unterschiedliche Eigenschaften haben, die mit der dargestellten Anlage hergestellt werden sollen, im Steuergerät 5 eine entsprechende Kollektion von unterschiedlichen Parameterdatensätzen gespeichert sein muss, denen jeweils ein individuelles Steuer- und Korrekturprogramm für das Florstreckwerk 2 zugeordnet ist.

In der vorangehenden Beschreibung ist bevorzugt auf die Herstellung eines Nadelfilzes Bezug genommen worden, weil dort die Randaufdickung ein besonders Problem darstellt, beispielsweise bei Nadelfilz-Teppichböden, wo es beim Stoßen einer Bahn voller Breite mit einer aus derselben Rolle herausgeschnittenen Bahn halber Breite zu einer Stufe zwischen den beiden verlegten Bahnen kommen kann. Als Erzeugnis kommt aber auch jedes andere verfestigte Erzeugnis in Betracht, bei dem eine gleichmäßige Dicke über die gesamte Bahnbreite gefordert wird. Solche sind beispielsweise auch Filtertücher, bei denen ungleiche Dicken zu einer ungleichmäßigen Durchflussverteilung führen würden. Wenn also in der Beschreibung von einem Nadelfilz die Rede ist, dann soll dieses nicht einschränkend verstanden werden, sondern steht stellvertretend auch für andere Arten von verfestigten Vliesstoffen.

## Patentansprüche

1. Verfahren zum Herstellen einer verfestigten Vliesstoffbahn (F) durch Kreuzlegen einer von einem Florerzeuger (1) mit gleichmäßigem Querprofil erzeugten Faserflorbahn (C) und anschließendes Verfestigen der so gebildeten kreuzgelegten Vliesbahn (V), wobei die Dicke der verfestigten Vliesstoffbahn (F) fortlaufend gemessen und die Messwerte zur Beeinflussung der Florablage verwendet werden, **gekennzeichnet durch** folgende Schritte:
Ermitteln von Gesetzmäßigkeiten der **durch** den Verfestigungsvorgang verursachten Strukturveränderung der kreuzgelegten Vliesbahn (V) unter Berücksichtigung einer Vielzahl von Herstellungsparametern;
Speichern der Gesetzmäßigkeiten;
Messen der Dicke der verfestigten Vliesstoffbahn (F) nur in der Mitte und im Bereich wenigstens eines ihrer Ränder mittels an diesen Stellen angeordneter Sensoren (6m, 6r);
Vergleichen der Messwerte mit Sollwerten für die Dicke der verfestigten Vliesstoffbahn (F); und
Verändern der Dicke der abzulegenden Florbahn (C) auf der Basis des Vergleichs unter Berücksichtigung der gespeicherten Gesetzmäßigkeiten.

2. Verfahren nach Anspruch 1, **dadurch gekennzeichnet, dass** bei der Ermittlung der Gesetzmäßigkeiten die Art der die Florbahn (C) bildenden Fasern und die Art der Behandlung der Flor- oder Vliesbahn (C, V) beim Krempeln, Kreuzlegen und Verfestigen berücksichtigt werden.

3. Verfahren nach einem der vorhergehenden Ansprüche, **dadurch gekennzeichnet, dass** die Dicke der verfestigten Vliesstoffbahn (F) im Bereich beider Ränder gemessen wird.

4. Verfahren nach einem der hervorgehenden Ansprüche, **dadurch gekennzeichnet, dass** die Dicke der abzulegenden Florbahn (F) vor ihrem Einlauf in einen Kreuzleger (3) verändert wird.

5. Verfahren nach einem der Ansprüche 1 bis 3, **dadurch gekennzeichnet, dass** die Dicke der Florbahn (F) unmittelbar vor ihrer Ablage verändert wird.

6. Verfahren nach einem der vorhergehenden Ansprüche, **dadurch gekennzeichnet, dass** die kreuzgelegte Vliesbahn (V) durch Nadelung verfestigt wird.

7. Verfahren nach einem der Ansprüche 1 bis 5, **dadurch gekennzeichnet, dass** die kreuzgelegte Vliesbahn (V) durch ein Fluidstrahlverfahren verfestigt wird.

8. Verfahren nach einem der Ansprüche 1 bis 5, **dadurch gekennzeichnet, dass** die kreuzgelegte Vliesbahn (V) nach dem Malivliesverfahren verfestigt wird.

9. Verfahren nach einem der vorhergehenden Ansprüche, **dadurch gekennzeichnet, dass** die kreuzgelegte Vliesbahn (V) chemisch verfestigt wird.

10. Verfahren nach einem der vorhergehenden Ansprüche, **dadurch gekennzeichnet, dass** die kreuzgelegte Vliesbahn (V) thermisch verfestigt wird.

## Claims

1. Method for producing a consolidated nonwoven web (F) by cross-laying a card web (C) produced with a uniform transverse profile by a card web forming device (1) and subsequently consolidating the cross-laid nonwoven web (V) thus formed, the thickness of the consolidated nonwoven web (F) being measured continuously and the measured values being used to influence the laying of the card web,
**characterised by** the following steps:
determining principles of the structural change, caused by the consolidating process, in the cross-laid nonwoven web (V), taking into account a plurality of production parameters;
storing the principles;
measuring the thickness of the consolidated nonwoven web (F) only in the middle and in the region of at least one of its edges by means of sensors (6m, 6r) located at these points;
comparing the measured values with desired values for the thickness of the consolidated nonwoven web (F); and
changing the thickness of the card web (C) to be laid on the basis of the comparison, taking into account the stored principles.

2. Method according to claim 1 **characterised in that** the type of fibres forming the card web (C) and the type of treatment to which the card web or nonwoven web (C, V) is subjected during carding, cross-laying, and consolidating are taken into account when determining the principles.

3. Method according to any one of the preceding claims, **characterised in that** the thickness of the consolidated nonwoven web (F) is measured in the region of the two edges.

4. Method according to any one of the preceding claims, **characterised in that** the thickness of the card web (F) to be laid is changed before the web is fed into a cross-layer (3).

5. Method according to any one of claims 1 to 3, **characterised in that** the thickness of the card web (F) is changed immediately before it is laid.

6. Method according to any one of the preceding claims, **characterised in that** the cross-laid nonwoven web (V) is consolidated by needling.

7. Method according to any one of claims 1 to 5, **characterised in that** the cross-laid nonwoven web (V) is consolidated by a fluid jet method.

8. Method according to any one of claims 1 to 5, **characterised in that** the cross-laid nonwoven web (V) is consolidated according to the Malivlies method.

9. Method according to any one of the preceding claims, **characterised in that** the cross-laid nonwoven web (V) is consolidated chemically.

10. Method according to any one of the preceding claims, **characterised in that** the cross-laid nonwoven web (V) is consolidated thermally.

## Revendications

1. Procédé de fabrication d'une nappe d'étoffe nappée (F) consolidée par dépose en croix d'une nappe de voile de carde (C), produite avec un profil transversal régulier par un générateur de voile (1), et consolidation consécutive de la nappe de non-tissé (V) déposée en croix, ainsi formée, l'épaisseur de la nappe d'étoffe nappée (F) consolidée étant mesurée en continu et les valeurs de mesure étant utilisées pour influer sur la dépose du voile,
**caractérisé par** les étapes suivantes :
détermination de lois de la modification de structure, provoquée par l'opération de consolidation, de la nappe de non-tissé (V) déposée en croix, compte tenu d'une multiplicité de paramètres de fabrication ;
mémorisation des lois ;
mesure de l'épaisseur de la nappe d'étoffe nappée (F) consolidée, uniquement au centre et dans la zone d'au moins l'un de ses bords, au moyen de détecteurs (6m, 6r) disposés en ces endroits ;
comparaison des valeurs de mesure avec des valeurs de consigne pour l'épaisseur de la nappe d'étoffe nappée (F) consolidée ; et
modification de l'épaisseur de la nappe de voile (C) sur la base de la comparaison, compte tenu des lois mémorisées.

2. Procédé suivant la revendication 1, **caractérisé en ce que** la nature des fibres, formant la nappe de voile (C), et le type de traitement de la nappe de voile ou de non-tissé (C, V) lors du cardage, de la dépose en croix et de la consolidation sont pris en compte dans la détermination des lois.

3. Procédé suivant l'une des revendications précédentes, **caractérisé en ce que** l'épaisseur de la nappe d'étoffe nappée (F) consolidée est mesurée dans la zone des deux bords.

4. Procédé suivant l'une des revendications précédentes, **caractérisé en ce que** l'épaisseur de la nappe de voile (F) à déposer est modifiée avant son admission dans un étaleur-nappeur (3).

5. Procédé suivant l'une des revendications 1 à 3, **caractérisé en ce que** l'épaisseur de la nappe de voile (F) est modifiée directement avant sa dépose.

6. Procédé suivant l'une des revendications précédentes, **caractérisé en ce que** la nappe de non-tissé (V) déposée en croix est consolidée par aiguilletage.

7. Procédé suivant l'une des revendications 1 à 5, **caractérisé en ce que** la nappe de non-tissé (V) déposée en croix est consolidée par un procédé par jets d'eau.

8. Procédé suivant l'une des revendications 1 à 5, **caractérisé en ce que** la nappe de non-tissé (V) déposée en croix est consolidée suivant le procédé malien.

9. Procédé suivant l'une des revendications précédentes, **caractérisé en ce que** la nappe de non-tissé (V) déposée en croix est consolidée par voie chimique.

10. Procédé suivant l'une des revendications précédentes, **caractérisé en ce que** la nappe de non-tissé (V) déposée en croix est consolidée par voie thermique.
